# EUROPÄISCHE PATENTSCHRIFT

(11) **EP 4 426 459 B1**
(45) Veröffentlichungstag und Bekanntmachung des Hinweises auf die Patenterteilung: **22.10.2025**
(21) Anmeldenummer: 22814308.7
(22) Anmeldetag: 03.11.2022
(51) Int. Cl.: B01D 27/08, B01D 29/00

(54) **ZENTRIERRING UND FILTER MIT DIESEM ZENTRIERRING**
CENTERING RING FOR CENTERING A FILTER ELEMENT IN A FILTER HOUSING
BAGUE DE CENTRAGE DESTINÉE AU CENTRAGE D'UN ÉLÉMENT FILTRANT DANS UN CARTER DE FILTRE

(30) Priorität: 03.11.2021 EP 21206328
(43) Veröffentlichungstag der Anmeldung: 11.09.2024
(73) Patentinhaber: MERLIN Technology GmbH, 4911 Tumeltsham (AT)
(72) Erfinder: REISINGER, Johann, 4925 Pramet (AT)
(74) Vertreter: Jell, Friedrich
(86) Internationale Anmeldenummer: PCT/EP2022/080755
(87) Internationale Veröffentlichungsnummer: WO 2023/079044

(56) Entgegenhaltungen:
- CN-U- 208 177 079
- FR-A1- 2 272 314
- FR-A2- 2 310 501
- N N: "purway", 1 January 2015 (2015-01-01), pages 1 - 53, XP055880067, Retrieved from the Internet <URL:https://purway.de/afterbuy2018/img/kataloge/AF_purway-Katalog.pdf> [retrieved on 20220315]
- N N: "Filter Housings AH Catalogue", 1 January 2021 (2021-01-01), pages 9 - 10, XP055880060, Retrieved from the Internet <URL:https://aquafilter.com/source/Marketing_Materials/Katalogi_Broszury/AH_s.pdf> [retrieved on 20220315]

## Beschreibung

Die Erfindung betrifft einen Zentrierring und Filter mit diesem Zentrierring zur Zentrierung eines Filterelements in einem Filtergehäuse, mit einem Ringkörper und mit mehreren ersten und zweiten elastischen Stegen, die an den Ringkörper einstückig anschließen und von diesem abstehen, wobei die ersten Stege von der Innenseite des Ringkörpers zur Zentrierung des Filterelements gegenüber dem Ringkörper und die zweiten Stege von der Außenseite des Ringkörpers zur Zentrierung des Ringkörpers gegenüber dem Filtergehäuse weg verlaufen.

Um ein Filterelement in einem Filtergehäuse eines Wasserfilters zu zentrieren, sind diverse Zentrierringe bekannt (vgl. Zentrierring für Filterkartusche "Big Blue"). Diese Zentrierringe weisen einen zentrischen Ringkörper auf, von dem aus spiralförmige elastische Stege abstehen. Dabei verlaufen die ersten Stege von der Innenseite des Ringkörpers weg, um das Filterelement zu zentrieren - die zweiten Stege laufen von der Außenseite Ringkörpers weg, um den Ringkörper gegenüber dem Filtergehäuse zu zentrieren. Diese Zentrierringe reduzieren jedoch den Strömungsquerschnitt im Filtergehäuse erheblich, was einerseits den Druckverlust des Filterelements erhöht und andererseits Fließgeräusche durch Schwingungen an den spiralförmigen Stegen erzeugt. Zudem können sich die spiralförmigen Stege erheblich verformen, was einer standfesten Zentrierung des Filterelements entgegensteht.

Die Erfindung hat sich daher die Aufgabe gestellt, einen Zentrierring der geschilderten Art konstruktiv derart zu verändern, dass dieser ein Filterelement im Filtergehäuse standfest zentriert - und dabei auch geräuscharm ist sowie einen minimierten Druckverlust sicherstellt.

Die Erfindung löst die gestellte Aufgabe durch die Merkmale des Anspruchs 1.

Erstrecken sich die ersten und zweiten Stege jeweils in radialer Richtung vom Ringkörper weg, kann deren Erstreckung vergleichsweise kurzgehalten werden, ohne die Funktion der elastischen Stege hinsichtlich ihrer zentrierenden Wirkung zu beeinträchtigen. Der Freiraum zwischen Filtergehäuse und Filterelement wird demnach standfest aufrechterhalten - was den Druckverlust am Filter, beispielsweise Wasserfilter, vergleichsweise gering hält. Zudem besteht eine geringere Anfälligkeit hinsichtlich Schwingungen, womit Fließgeräusche vermieden werden. Außerdem bilden die vergleichsweise kurzen Stege geringe Angriffsfläche aus, was diese länger ablagerungsfrei hält. Des Weiteren ermöglichen die erfindungsgemäßen radial verlaufenden Stege eine vergleichsweise hohe kraftschlüssige Zentrierung bzw. Positionierung des Filterelements gegenüber dem Filtergehäuse, was die Standfestigkeit des Filters, beispielsweise Wasserfilters, erhöht. Der erfindungsgemäße Zentrierring kann daher das Filterelement im Filtergehäuse standfest, geräuscharm und bei minimiertem Druckverlust zentrieren.

Vorzugsweise liegen sich am Ringkörper jeweils ein erster und zweiter Steg zueinander fluchtend verlaufend gegenüber, um die Positionierung und Lagefixierung des Zentrierrings gegenüber dem Filterelement und dem Filtergehäuse weiter zu erleichtern.

Um die Herstellung des Zentrierrings weiter zu vereinfachen und die Herstellungskosten gering zu halten, kann vorgesehen sein, dass der Ringkörper sowie die erste und zweite Stege aus demselben Spritzgussmaterial bestehen.

Vorzugsweise sind die ersten und/oder zweiten Stege am Ringkörper einander diametral gegenüberliegend angeordnet, was einer exakten Zentrierung durch annähernd gleiche Biegebelastung der sich gegenüberliegenden Stege dienlich sein kann.

Zum Schutz des Filterelements weisen die ersten Stege beispielsweise an ihren freien Enden jeweils die Form eines Pilzkopfs auf. Zudem erleichtert dieses Merkmal die Positionierung des Zentrierrings am Filterelement, wenn dieser in das Filtergehäuse eingesetzt wird. Dies insbesondere dann, wenn das Filterelement beispielsweise als Wickelfilter ausgeführt ist und ein Verhaken der ersten Stege im Material des Filterelements zu befürchten ist.

Vorzugsweise weisen die ersten und/oder zweiten Stege im Wesentlichen über die gesamte Länge einen gleichen Querschnitt auf, um damit auf beiden Seiten des Ringkörpers ein ähnliches Strömungsverhalten zu erzeugen. Störungen im Spalt zwischen Filterelement und Filtergehäuse können so weitgehend vermieden werden.

Die Biegesteifigkeit der ersten Stege kann auf konstruktiv einfache Weise erhöht werden, wenn diese am Ringkörper jeweils über eine Versteifung angebunden sind. Damit kann beispielsweise erreicht werden, dass die ersten Stege eine höhere Biegesteifigkeit als die zweiten Stege aufweisen, was ein standfestes Anliegen der ersten Stege am Filterelement sicherstellen kann. Die Standfestigkeit des Zentrierrings kann damit weiter erhöht werden.

Um für verschieden große Filterelemente und/oder Filtergehäuse passende Zentrierringe zur Verfügung stellen zu können, wird eine Vorrichtung mit zwei Zentrierringen vorgeschlagen. Hierbei ist der erste Zentrierring innerhalb des zweiten Zentrierring angeordnet, um eine möglichst einfache Handhabung der Vorrichtung zu gewährleisten. Zudem sind der erste und der zweite Zentrierring miteinander verbunden, sodass die Zentrierringe einfach voneinander getrennt werden können - etwa mit einem Schneidwerkzeug.

Als ausreichend zur Erreichung dieser Vorteile kann sich erweisen, wenn der erste Zentrierring über mindestens zwei seiner zweiten Stege, mit jeweils einem ersten Steg des zweiten Zentrierrings zusammenhängt und damit mit dem zweiten Zentrierrings verbunden ist. Vorzugsweise sind diese zwei zweiten Stege diametral gegenüberliegenden.

Um etwa die Verwendung eines Schneidwerkzeugs zu vermeiden und folglich die Handhabung der Vorrichtung noch weiter zu vereinfachen, kann vorgesehen sein, dass zwischen den mindestens zwei miteinander verbundenen Stegen des ersten und der zweiten Zentrierrings jeweils eine Sollbruchstelle vorgesehen ist.

Der erfindungsgemäße Zentrierring eignet sich besonders bei einem Filter, insbesondere Wasserfilter, mit einem Filterelement, mit einem das Filterelement aufnehmenden Filtergehäuse, wobei der Zentrierring zwischen Filterelement und Filtergehäuse vorgesehen ist.

In den Figuren ist beispielsweise der Erfindungsgegenstand anhand einer Ausführungsvariante näher dargestellt. Es zeigen
- Fig. 1: eine Draufsicht auf einen Zentrierring,
- Fig. 2a: eine Schnittansicht nach II-II der Fig. 1,
- Fig. 2b: eine vergrößerte Teilansicht der Fig. 2a,
- Fig. 3: eine Draufsicht auf eine Vorrichtung mit dem nach Fig. 1 dargestellten Zentrierring und
- Fig. 4: eine vergrößerte Teilansicht der Fig. 3 im Schnitt nach IV-IV.

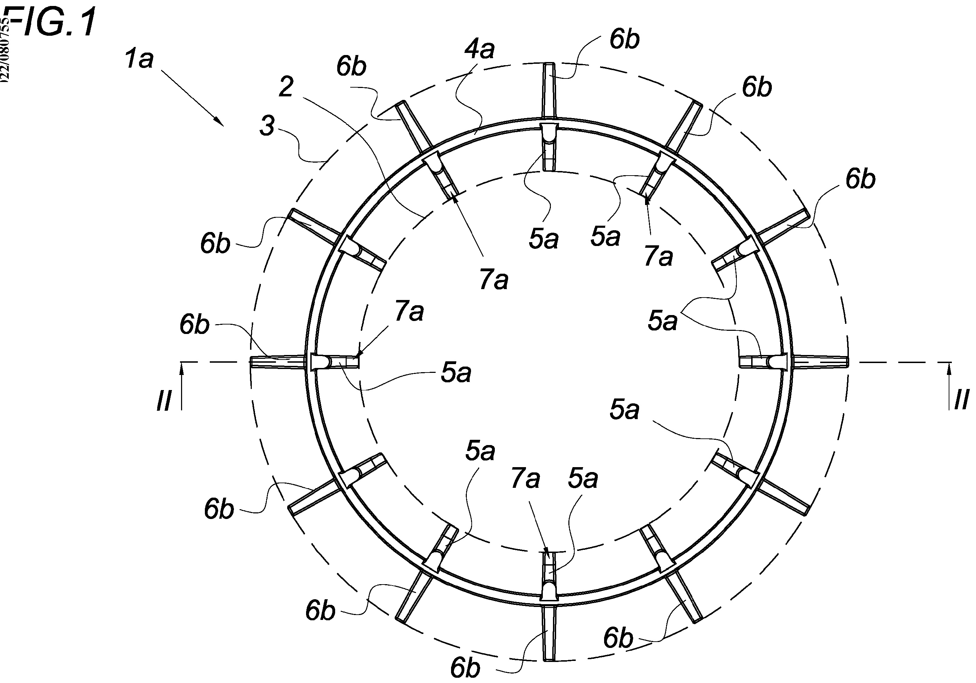

Nach Fig. 1 ist beispielsweise ein erster Zentrierring 1a dargestellt, der ein Filterelement 2, beispielsweise aus Cellpor, gegenüber einem Filtergehäuse 3 zentriert.

Der Zentrierring 1a weist hierzu einen Ringkörper 4a und mehrere elastische erste Stege 5a sowie mehrere elastische zweite Stege 6a auf. Die ersten Stege 5a verlaufen von der Innenseite des Ringkörpers 4a weg - und zentrieren damit das Filterelement 2 gegenüber dem Ringkörper 4a. Die zweiten Stege 6a verlaufen von der Außenseite des Ringkörpers 4a weg - und zentrieren den Ringkörper 4a gegenüber dem Filtergehäuse 3.

Erfindungsgemäß verlaufen die ersten und zweiten Stege derart, dass diese den Spalt zwischen Filterelement 2 und Filtergehäuse 3 so gering wie möglich verengen.

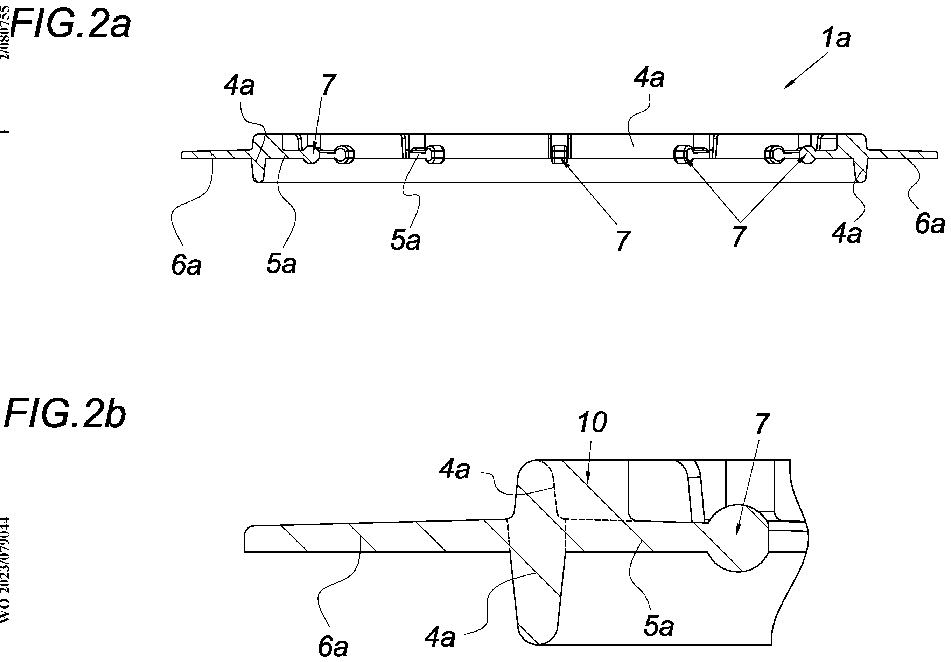

Hierzu erstrecken sich die ersten Stege 5a ausschließlich in radialer Richtung r1 von der Innenseite des Ringkörpers 4a weg - während sich die zweiten Stege 6a ausschließlich in radialer Richtung r2 von der Außenseite des Ringkörpers 4a nach außen weg erstrecken - wie in Fig. 1 und in Fig. 2 zu erkennen.

Die Zentrierung 1a wird im Spritzgussverfahren in einem Stück hergestellt, wodurch der Ringkörper 4a sowie die ersten und zweiten Stege 5a, 6a aus demselben Spritzgussmaterial, beispielsweise Kunststoff, bestehen.

Auch liegen sich die ersten und zweiten Stege 5a, 6a jeweils am Ringkörper 4a diametral gegenüber - was die Zentrierung zwischen Filterelement 2 und Filtergehäuse 3 erleichtert.

Für eine ausreichende Zentrierung können zwölf erste Stege 5a und zwölf zweite Stege 6 sorgen, die mit einem Winkelversatz α in Umfangsrichtung am Zentrierring 4 zueinander von 15 Grad angeordnet sind.

Auch weisen alle ersten Stege 5a an ihren freien Enden die Form eines Pilzkopfs 7 auf, um das Filterelement 2 mechanisch zu schonen.

Abgesehen vom Pilzkopf 7 an den ersten Stegen 5a weisen diese über die gesamte Länge den gleichen Querschnitt auf, ebenso wie die zweiten Stege 6a. Die ersten und zweiten Stegen 5a, 6a sind daher im Wesentlichen über die gesamte Länge im Querschnitt gleich.

Die Biegesteifigkeit der ersten Stege 5a wird durch die Versteifungen 10 erhöht. Dafür sind alle ersten Stege 5a jeweils über eine Versteifung 10 am Ringkörper 4a, 4b angebunden.

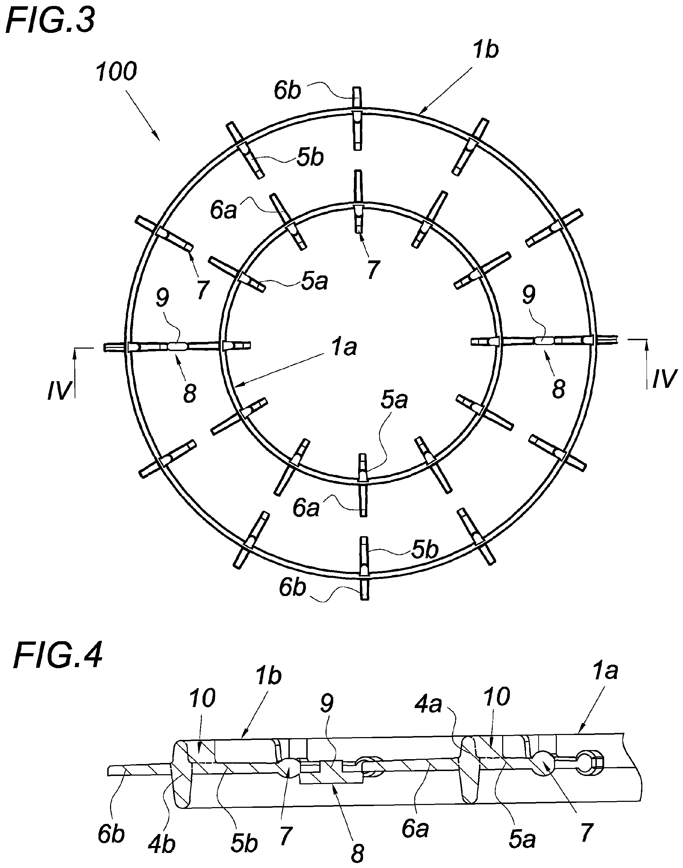

Im Spritzgussverfahren werden gleichzeitig zwei zusammenhängende Zentrierringen 1a, 1b als Vorrichtung 100 hergestellt - wie in Fig. 3 zu erkennen. Bei dieser

Vorrichtung 100 ist der erste Zentrierring 1a von einem größeren zweiten Zentrierring 1b umgeben - dieser ist abgesehen von seiner Größe nahezu ident mit dem ersten Zentrierring 1a. Demnach weist auch der zweite Zentrierring 1b einen Ringkörper 4b sowie erste und zweite Stege 5b, 6b auf. Der gegenüber dem zweiten Zentrierring 1b kleinere erste Zentrierring 1a ist innerhalb des zweiten Zentrierrings 1b angeordnet.

Der erste und der zweite Zentrierring 1a, 1b hängen über zwei separate Verbindungen mit den Stege 6a, 5b zusammen. So sind zwei zweite Stege 6a des ersten Zentrierrings 1a mit zwei ersten Stegen 5b des zweiten Zentrierrings 1b verbunden. Hierfür sind auch die zwei Verbindungen 8 aus zusammenhängenden Stege 6a, 5a diametral gegenüberliegend angeordnet.

Eine Sollbruchstelle 9 zwischen diesen Stegen 6a, 5a erleichtert die Trennung der beiden Zentrierringe 1a, 1b voneinander, wie dies im Detail in der Fig. 4 zu erkennen ist.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably".

## Patentansprüche

1. Zentrierring zur Zentrierung eines Filterelements (2) in einem Filtergehäuse (3), mit einem Ringkörper (4a bzw. 4b) und mit mehreren ersten und zweiten elastischen Stegen (5a, 6a bzw. 5b, 6b), die an den Ringkörper (4a bzw. 4b) einstückig anschließen und von diesem abstehen, wobei die ersten Stege (5a bzw. 5b) von der Innenseite des Ringkörpers (4a bzw. 4b) zur Zentrierung des Filterelements (2) gegenüber dem Ringkörper (4a bzw. 4b) und die zweiten Stege (6a bzw. 6b) von der Außenseite des Ringkörpers (4a bzw. 4b) zur Zentrierung des Ringkörpers (4a bzw. 4b) gegenüber dem Filtergehäuse (3) weg verlaufen, **dadurch gekennzeichnet, dass** sich die ersten und zweiten Stege (5a, 6a bzw. 5b, 6b) jeweils in radialer Richtung (r1, r2) vom Ringkörper (4a bzw. 4b) weg erstrecken.

2. Zentrierring nach Anspruch 1, **dadurch gekennzeichnet, dass** sich am Ringkörper (4a bzw. 4b) jeweils ein erster und zweiter Steg (5a, 6a bzw. 5b, 6b) zueinander fluchtend verlaufend gegenüberliegen.

3. Zentrierring nach Anspruch 1 oder 2, **dadurch gekennzeichnet, dass** der Ringkörper (4a bzw. 4b) sowie die ersten und zweiten Stege (5a, 6a bzw. 5b, 6b) aus demselben Spritzgussmaterial bestehen.

4. Zentrierring nach einem der Ansprüche 1 bis 3, **dadurch gekennzeichnet, dass** die ersten und/oder zweiten Stege (5a, 6a bzw. 5b, 6b) am Ringkörper (4a bzw. 4b) einander diametral gegenüberliegend angeordnet sind.

5. Zentrierring nach einem der Ansprüche 1 bis 4, **dadurch gekennzeichnet, dass** die ersten und/oder zweiten Stege (5a, 6a bzw. 5b, 6b) mit einem Winkelversatz in Umfangsrichtung am Ring zueinander von 15 Grad angeordnet sind.

6. Zentrierring nach einem der Ansprüche 1 bis 5, **dadurch gekennzeichnet, dass** die ersten Stege (5a bzw. 5b) an ihren freien Enden jeweils die Form eines Pilzkopfs (7a bzw. 7b) aufweisen.

7. Zentrierring nach einem der Ansprüche 1 bis 6, **dadurch gekennzeichnet, dass** die ersten und/oder zweiten Stege (5a, 6a bzw. 5b, 6b) im Wesentlichen über die gesamte Länge einen gleichen Querschnitt aufweisen.

8. Zentrierring nach einem der Ansprüche 1 bis 7, **dadurch gekennzeichnet, dass** die ersten Stege (5a bzw. 5b) am Ringkörper (4a bzw. 4b) jeweils über eine Versteifung (10) angebunden sind.

9. Vorrichtung mit zwei Zentrierringen (1a, 1b) nach einem der Ansprüche 1 bis 8, wobei der erste Zentrierring (1a) innerhalb des zweiten Zentrierring (1b) angeordnet ist und wobei der erste und zweite Zentrierring (1a, 1b) miteinander verbunden sind.

10. Vorrichtung nach Anspruch 9, **dadurch gekennzeichnet, dass** der erste Zentrierring (1a) über mindestens zwei, insbesondere diametral gegenüberliegenden, seiner zweiten Stege (6a), mit jeweils einem ersten Steg (5b) des zweiten Zentrierrings (1b) zusammenhängt und damit mit dem zweiten Zentrierrings (1b) verbunden ist.

11. Vorrichtung nach Anspruch 9 oder 10, **dadurch gekennzeichnet, dass** zwischen den mindestens zwei miteinander verbundenen Stegen (6a bzw. 5b) des ersten und der zweiten Zentrierrings (1a, 1b) jeweils eine Sollbruchstelle (9) vorgesehen ist.

12. Filter, insbesondere Wasserfilter, mit einem Filterelement (2), mit einem das Filterelement (2) aufnehmenden Filtergehäuse (3) und mit einem Zentrierring (1a bzw. 1b) nach einem der Ansprüche 1 bis 8 zwischen Filterelement (2) und Filtergehäuse (3).

13. Filter nach Anspruch 12, **dadurch gekennzeichnet, dass** das Filterelement (2) ein Wickelfilter ist.

## Claims

1. Centering ring for centering a filter element (2) in a filter housing (3), having an annular body (4a or 4b) and having a plurality of first and second elastic webs (5a, 6a or 5b, 6b) which integrally adjoin the annular body (4a or 4b) and protrude therefrom, wherein the first webs (5a or 5b) extend away from the inside of the annular body (4a or 4b) for centering the filter element (2) relative to the annular body (4a or 4b) and the second webs (6a or 6b) extend away from the outer side of the annular body (4a or 4b) for centering the annular body (4a or 4b) relative to the filter housing (3), **characterized in that** the first and second webs (5a, 6a or 5b, 6b) extend in a radial direction (r1, r2) away from the annular body (4a or 4b).

2. Centering ring according to claim 1, **characterized in that** a first and second web (5a, 6a or 5b, 6b) are located in each case on the annular body (4a or 4b) opposite each other and are aligned with each other.

3. Centering ring according to claim 1 or 2, **characterized in that** the annular body (4a or 4b) and the first and second webs (5a, 6a or 5b, 6b) are made of the same injection molded material.

4. Centering ring according to one of claims 1 to 3, **characterized in that** the first and/or second webs (5a, 6a or 5b, 6b) are arranged diametrically opposite each other on the annular body (4a or 4b).

5. Centering ring according to one of claims 1 to 4, **characterized in that** the first and/or second webs (5a, 6a or 5b, 6b) are arranged at an angular offset of 15 degrees to each other in the circumferential direction on the ring.

6. Centering ring according to one of claims 1 to 5, **characterized in that** the first webs (5a or 5b) in each case have the shape of a mushroom head (7a or 7b) at their free ends.

7. Centering ring according to one of claims 1 to 6, **characterized in that** the first and/or second webs (5a, 6a or 5b, 6b) have substantially the same cross-section over their entire length.

8. Centering ring according to one of claims 1 to 7, **characterized in that** the first webs (5a or 5b) are each connected to the annular body (4a or 4b) via a stiffening (10).

9. Device having two centering rings (1a, 1b) according to one of claims 1 to 8, wherein the first centering ring (1a) is arranged inside the second centering ring (1b) and wherein the first and second centering rings (1a, 1b) are connected to each other.

10. Device according to claim 9, **characterized in that** the first centering ring (1a) is connected to at least two, more particularly diametrically opposite, of its second webs (6a), each with a first web (5b) of the second centering ring (1b), and is thus connected to the second centering ring (1b).

11. Device according to claim 9 or 10, **characterized in that** a predetermined breaking point (9) is provided between each of the at least two interconnected webs (6a or 5b) of the first and second centering rings (1a, 1b).

12. Filter, more particularly water filter, having a filter element (2), having a filter housing (3) accommodating the filter element (2) and having a centering ring (1a or 1b) according to one of claims 1 to 8 between the filter element (2) and the filter housing (3).

13. Filter according to claim 12, **characterized in that** the filter element (2) is a wound filter.

## Revendications

1. Bague de centrage pour centrer un élément filtrant (2) dans un boîtier de filtre (3), comprenant un corps de bague (4a ou 4b) et plusieurs premières et deuxièmes nervures élastiques (5a, 6a ou 5b, 6b) qui sont reliées d'une seule pièce au corps de bague (4a ou 4b) et font saillie à partir de celui-ci, les premières nervures (5a ou 5b) s'étendant à partir du côté intérieur du corps de bague (4a ou 4b) pour centrer l'élément filtrant (2) par rapport au corps de bague (4a ou 4b) et les deuxièmes nervures (6a ou 6b) s'étendant à partir du côté extérieur du corps de bague (4a ou 4b) pour centrer le corps de bague (4a ou 4b) par rapport au boîtier de filtre (3), **caractérisé en ce que** les premières et deuxièmes nervures (5a, 6a ou 5b, 6b) s'étendent chacune dans une direction radiale (r1, r2) à partir du corps de bague (4a ou 4b).

2. Bague de centrage selon la revendication 1, **caractérisée en ce qu'**une première et une deuxième nervure (5a, 6a ou 5b, 6b) sont chaque fois disposées en vis-à-vis sur le corps de bague (4a ou 4b) de manière alignées l'une par rapport à l'autre.

3. Bague de centrage selon la revendication 1 ou 2, **caractérisée en ce que** le corps de bague (4a ou 4b) ainsi que les premières et deuxièmes nervures (5a, 6a ou 5b, 6b) sont constitués du même matériau moulé par injection.

4. Bague de centrage selon l'une des revendications 1 à 3, **caractérisée en ce que** les premières et/ou deuxièmes nervures (5a, 6a ou 5b, 6b) sont disposées de manière diamétralement opposées sur le corps de bague (4a ou 4b).

5. Bague de centrage selon l'une des revendications 1 à 4, **caractérisée en ce que** les premières et/ou deuxièmes nervures (5a, 6a ou 5b, 6b) sont disposées avec un décalage angulaire de 15 degrés les unes par rapport aux autres dans la direction circonférentielle de la bague.

6. Bague de centrage selon l'une des revendications 1 à 5, **caractérisée en ce que** les premières nervures (5a ou 5b) présentent chacune à leurs extrémités libres la forme d'une tête de champignon (7a ou 7b).

7. Bague de centrage selon l'une des revendications 1 à 6, **caractérisée en ce que** les premières et/ou deuxièmes nervures (5a, 6a ou 5b, 6b) présentent une section transversale sensiblement identique sur toute leur longueur.

8. Bague de centrage selon l'une des revendications 1 à 7, **caractérisée en ce que** les premières nervures (5a ou 5b) sont chacune reliées au corps de bague (4a ou 4b) par un renfort (10).

9. Dispositif comprenant deux bagues de centrage (1a, 1b) selon l'une des revendications 1 à 8, la première bague de centrage (1a) étant disposée à l'intérieur de la deuxième bague de centrage (1b) et les première et deuxième bagues de centrage (1a, 1b) étant reliées entre elles.

10. Dispositif selon la revendication 9, **caractérisé en ce que** la première bague de centrage (1a) est reliée à la deuxième bague de centrage (1b) par au moins deux de ses deuxièmes nervures (6a), en particulier diamétralement opposées, chacune à une première nervure (5b) de la deuxième bague de centrage (1b).

11. Dispositif selon la revendication 9 ou 10, **caractérisé en ce qu'**une zone de rupture (9) est prévu entre chacune des au moins deux nervures (6a ou 5b) reliées entre elles de la première et de la deuxième bague de centrage (1a, 1b).

12. Filtre, en particulier filtre à eau, comprenant un élément filtrant (2), un boîtier de filtre (3) recevant l'élément filtrant (2) et une bague de centrage (1a ou 1b) selon l'une des revendications 1 à 8 entre l'élément filtrant (2) et le boîtier de filtre (3).

13. Filtre selon la revendication 12, **caractérisé en ce que** l'élément filtrant (2) est un filtre enroulé.
